# EUROPEAN PATENT APPLICATION

(11) **EP 4 819 070 A1**
(43) Date of publication of application: **07.10.2026**
(21) Application number: 25315115.3
(22) Date of filing: 01.04.2025
(51) Int. Cl.: G06V 20/10, G06V 20/68

(54) **A METHOD OF MONITORING A FRUIT CROP**

(71) Applicant: CNH Industrial France S.A.S., 91150 Morigny-Champigny (FR); CNH Industrial Italia S.p.A., 10156 Torino (IT)
(72) Inventor: Styblinski, Theo, 91150 Morigny-Champigny (FR); Mazzone, Giuseppe, 10156 Turin (IT); Medici, Lorenzo, 10156 Turin (IT); Savas, Iremsu, 10156 Turin (IT); Ferrari, Luca, 10156 Turin (IT); Lisurici, Fabio, 10156 Turin (IT); Rizzi, Andrea, 10156 Turin (IT)
(74) Representative: CNH Industrial IP Department

(57) **Abstract**

A computer-implemented-method of monitoring a fruit crop, the method comprising: receiving first image data corresponding to a first image of a fruit plant, wherein the first image data comprises: one or more first fruit cluster datasets representing one or more respective fruit clusters visible in the first image; and a first location identifier associated with the first image; receiving reference image data corresponding to one or more reference images of the fruit plant captured at an earlier time than the first image, wherein the reference image data comprises: one or more reference fruit cluster datasets representing one or more respective fruit clusters visible in the one or more reference images; and a reference location identifier associated with the reference image, wherein the reference location identifier matches the first location identifier; processing the first image data and the reference image data to identify one or more occluded fruit clusters in the first image data; applying an occluded fruit cluster adjustment to the one or more occluded fruit clusters to obtain compensated first image data; and outputting the compensated first image data.

## Description

### Field

The present disclosure relates to an apparatus and a method for monitoring a fruit crop.

### BACKGROUND

A yield of a fruit crop, such as a grape crop, can be estimated based on images of the fruit crop just before harvest. However, leaf coverage is at its greatest just before harvest and the leaves can occlude clusters of fruit resulting in inaccurate yield estimates. A famer may perform a defoliating operation to remove the leaves prior to taking the images but this can add significant cost to the harvest.

### Summary

According to a first aspect of the present disclosure there is provided a computer-implemented-method of monitoring a fruit crop, the method comprising:
receiving first image data corresponding to a first image of a fruit plant, wherein the first image data comprises:
   one or more first fruit cluster datasets representing one or more respective fruit clusters visible in the first image; and
   a first location identifier associated with the first image;
receiving reference image data corresponding to one or more reference images of the fruit plant captured at an earlier time than the first image, wherein the reference image data comprises:
   one or more reference fruit cluster datasets representing one or more respective fruit clusters visible in the one or more reference images; and
   a reference location identifier associated with the reference image, wherein the reference location identifier matches the first location identifier;
processing the first image data and the reference image data to identify one or more occluded fruit clusters in the first image data;
applying an occluded fruit cluster adjustment to the one or more occluded fruit clusters to obtain compensated first image data; and
outputting the compensated first image data.

Processing the first image data and the reference image data may comprise: associating each first fruit cluster dataset with a respective reference fruit cluster dataset; and identifying the one or more occluded fruit clusters based on the association.

The method may comprise identifying any reference fruit cluster datasets that are not associated with a first fruit cluster datasets as an occluded fruit cluster of the first image data.

Identifying the one or more occluded fruit clusters may comprise: for each first fruit cluster dataset, determining a dimension ratio between the dimension of the first fruit cluster dataset and a corresponding reference dimension of the respective reference fruit cluster dataset; and identifying an occluded fruit cluster if the respective dimension ratio is an outlier relative to the other dimension ratios.

Identifying the one or more occluded fruit clusters may comprise: determining an expected dimension threshold for a dimension of each first fruit cluster dataset based on the respective reference fruit cluster dataset; and identifying an occluded first fruit cluster if the dimension of the respective first fruit cluster dataset does not satisfy the respective expected dimension threshold.

The dimension may comprise a fruit count, one or more lengths or an area of a bounding shape of the fruit cluster.

Determining the expected dimension threshold for a dimension of each first fruit cluster dataset may comprise: determining a dimension ratio between the dimension of the first fruit cluster dataset and a corresponding reference dimension of the respective reference fruit cluster dataset; determining an average dimension ratio by averaging the dimension ratios; and determining the expected dimension threshold for each first fruit cluster dataset based on the corresponding reference dimension of the respective reference fruit cluster dataset and the average dimension ratio.

Determining the expected dimension threshold for a dimension of each first fruit cluster dataset may comprise one or more of: determining the expected dimension threshold as equal to a corresponding reference dimension of the respective reference fruit cluster dataset; or determining the expected dimension threshold based on: a corresponding reference dimension of the respective reference fruit cluster dataset; a time between a capture of the reference image and a capture of the first image; and an expected growth rate.

The reference image dataset may correspond to a plurality of reference images of the fruit plant. The reference fruit cluster dataset may comprise a plurality of reference fruit cluster subsets corresponding to the plurality of reference images. The method may comprise determining the expected growth rate based on a rate of increase of the corresponding reference dimension between the plurality of reference fruit cluster subsets.

The first image data and the reference image data may comprise reference object data representing a substantially fixed dimension reference object. The method may comprise: determining a scaling factor based on a change in dimension between the reference object data in the reference image data and the first image data; and applying the scaling factor to the first image data.

The reference object may comprise one or more of: a trunk of the fruit plant; a tree support stake or a fence member.

The method may comprise, for each of the one or more identified occluded fruit clusters: performing a leaf detection process on each occluded fruit cluster; verifying the occluded fruit cluster if a leaf is detected; and determining the occluded fruit cluster as a depleted fruit cluster if no leaf is detected.

The method may comprise receiving the first image and performing the leaf detection process on an occluded area of the image corresponding to the occluded fruit cluster.

Applying the occluded fruit cluster adjustment may comprise: for each first fruit cluster dataset, determining a dimension ratio between the dimension of the first fruit cluster dataset and a corresponding reference dimension of the respective reference fruit cluster dataset; determining an average dimension ratio by averaging the dimension ratios; and for each of the one or more occluded fruit clusters: scaling the respective reference fruit cluster dataset according to the average dimension ratio.

Applying the occluded fruit cluster adjustment may comprise: for each of the one or more occluded fruit clusters: matching one or more dimensions of the first fruit cluster dataset of the occluded fruit cluster to one or more corresponding dimensions of the respective reference fruit cluster dataset to identify one or more non-occluded dimensions; determining a cluster growth rate based on the difference between the one or more non-occluded dimensions in the first fruit cluster dataset and the corresponding one or more non-occluded dimensions in the respective reference fruit cluster dataset; and applying the cluster growth rate to the respective reference fruit cluster dataset to provide a compensated first fruit cluster dataset.

The method may comprise retrieving the reference image data from a data storage device based on the first location identifier. The method may comprise selecting the reference image data having a reference location identifier that matches the first location identifier. The reference location identifier may match the first location identifier within a threshold range.

The location identifier may correspond to a pose of the camera, that captured the image, when the image was captured.

The reference fruit cluster dataset and / or the first fruit cluster dataset may comprise dimension data and/or fruit count data. Dimension data may comprise area data. Compensated first image data may comprise dimension data and/or fruit count data. Dimension data may comprise area data.

The method may comprise determining a fruit harvest yield estimate based on the compensated first image data and optionally the reference image data.

The fruit plant may comprise a grape plant. The fruit plant may comprise a cotton plant. The fruit plant may comprise a berry plant such as a blueberry plant, a blackberry plant, or a strawberry plant.

The first image may comprise one or more of: a camera image, a stereo camera image, a lidar image, a time-of-flight camera image, or a radar scan.

The method may comprise updating the reference image data using the compensated first image data.

The method of any preceding claim further comprising:
receiving second image data corresponding to a second image of a second fruit plant, wherein the second image data comprises one or more second fruit cluster datasets representing one or more respective fruit clusters visible in the second image;
receiving second reference image data corresponding to one or more second reference images of the second fruit plant captured at an earlier time than the second image, wherein the second reference image data comprises one or more second reference fruit cluster datasets representing one or more respective fruit clusters visible in the one or more second reference images;
processing the second image data and the second reference image data to identify one or more second occluded fruit clusters in the second image data;
applying the occluded fruit cluster adjustment to the one or more second occluded fruit clusters to obtain compensated second image data; and
outputting the compensated second image data.

An apparatus comprising one or more processors configured to carry out the method of any preceding claim.

According to a second aspect of the present disclosure there is provided an agricultural vehicle comprising:
a radiation sensor; and
one or more processors configured to:
   receive the reference image from the radiation sensor and process the reference image with a fruit cluster detection algorithm to provide the reference image data;
   receive the first image from the camera and process the first image with the fruit cluster detection algorithm to provide the first image data; and
   carry out any of the methods disclosed herein.

The agricultural vehicle may comprise a position sensor. The processor may be configured to: receive a first position sensor value from the position sensor when the camera captures the first image and store the first position sensor value as a first location identifier of the first image data; and receive a reference position sensor value from the position sensor when the camera captures the reference image and store the reference position sensor value as a reference location identifier of the reference image data.

There may be provided a computer program, which when run on a computer, causes the computer to configure any apparatus, including a circuit, controller, converter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download. There may be provided one or more non-transitory computer-readable storage media storing computer-executable instructions that, when executed by a computing system, causes the computing system to perform any method disclosed herein.

### Brief Description of the Drawings

One or more embodiments will now be described by way of example only with reference to the accompanying drawings in which:
Figure 1 illustrates an example agricultural setting comprising a fruit crop;
Figure 2A illustrates a first image captured in a setting similar to that of Figure 1;
Figure 2B illustrates a second image captured in a setting similar to that of Figure 1;
Figure 2C illustrates a third image captured in a setting similar to that of Figure 1;
Figure 3 illustrates an example process for identifying one or more fruit clusters in an image, such as the images of Figures 2A to 2C;
Figure 4 illustrates a method of monitoring a fruit crop according to an embodiment of the present disclosure;
Figure 5A illustrates an example association of first fruit cluster data and reference fruit cluster data corresponding to the image of Figure 2A;
Figure 5B illustrates an example association of first fruit cluster data and reference fruit cluster data corresponding to the image of Figure 2B;
Figure 5C illustrates an example association of first fruit cluster data and reference fruit cluster data corresponding to the image of Figure 2C;
Figure 5D illustrates compensated fruit cluster data corresponding to the images of Figures 2A, 2B and 2C;
Figure 6A illustrates a blueberry plant with blueberry clusters; and
Figure 6B illustrates a cotton plant with cotton clusters.

### Detailed Description

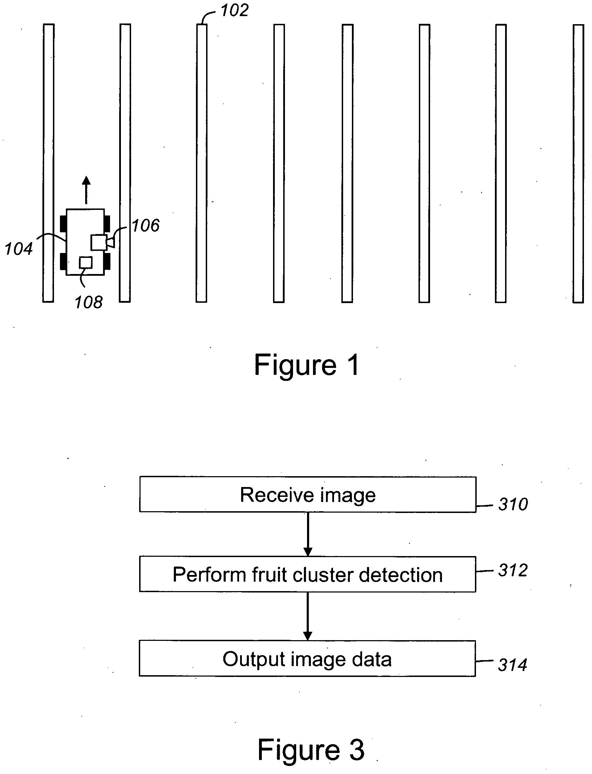

Figure 1 illustrates an example agricultural setting comprising a fruit crop. In this example, the agricultural setting comprises a vineyard and the fruit crop comprises a grape crop arranged in rows of grapevines 102. During a crop cycle, a number of operations are performed on the grapevines 102, such as spraying, pruning, harvesting etc. Such operations are typically performed by a vehicle 104 travelling between or over the grapevines 102. The present disclosure can make use of these repeated operations and associated repeated vehicle travel to monitor the fruit crop. The vehicle 104 may comprise a tractor, a fruit harvester, such as a grape harvester, a robot, a drone or another vehicle associated with a fruit crop.

In this example, a camera 106 is mounted to the vehicle 104. The camera 106 can capture images of the grapevines 102 as the vehicle 104 travels along the rows, as a way of monitoring the growth of the grape crop. Although the examples described herein predominantly relate to camera images captured by a camera, the scope of the application is not limited thereto. As described herein, an image and its associated image data may relate to any captured imagery of a fruit plant. This captured imagery may include one or more of: a camera image, a stereo-camera image, a LiDAR image, a time-of-flight camera image or a radar scan. A LiDAR image may comprise a point cloud. Such imagery may be captured by a corresponding radiation sensor. The radiation sensor may comprise one or more of: a camera, a stereo-camera, a LiDAR system, a time-of-flight system, or a radar, as applicable.

In this example, the camera 106 is mounted to capture images of a field of view to the side of the vehicle 104. In other examples, the camera 106 may be mounted on a front, a rear or a roof of the vehicle 104. In some examples, the vehicle 104 may include two cameras, one positioned on either side of the vehicle 104. In this example, the camera 106 is fixedly mounted to the vehicle 104 so that the camera 106 always has the same pose (position and orientation) with respect to the vehicle 106. In other examples, the camera 106 may have an adjustable orientation, enabling rotation of the camera with respect to the vehicle 104. In examples with an adjustable orientation, the camera 106 or mount may comprise an orientation sensor such as a gyroscope. Providing a fixed mount enables images of the same vine to be easily captured with substantially the same viewpoint for a series of different operations / journeys of the vehicle 104 that may be spaced apart in time by days, weeks or months.

In this example, the vehicle 104 includes a position sensor 108. The position sensor may be coupled to the camera 106. The position sensor 108 may comprise a global navigation satellite system (GNSS) sensor such as a global positioning satellite (GPS) sensor or a GNSS alternative such as inertial navigation sensor system. The position sensor 108 may comprise a real-time kinematic (RTK) GPS sensor providing cm precision.

Providing a position sensor 108 on the vehicle 104 can enable association of a location identifier with each captured image. The location identifier may comprise an absolute pose (position and orientation) of the camera 106 when the image was captured. The location identifier may correspond to a position sensor value when the image was captured. The position sensor value may include a position and/or heading of the vehicle 104 or camera 106 when the image was captured. In some examples, the location identifier may also comprise a pose or orientation of the camera (absolute or relative to the vehicle) when the image was captured.

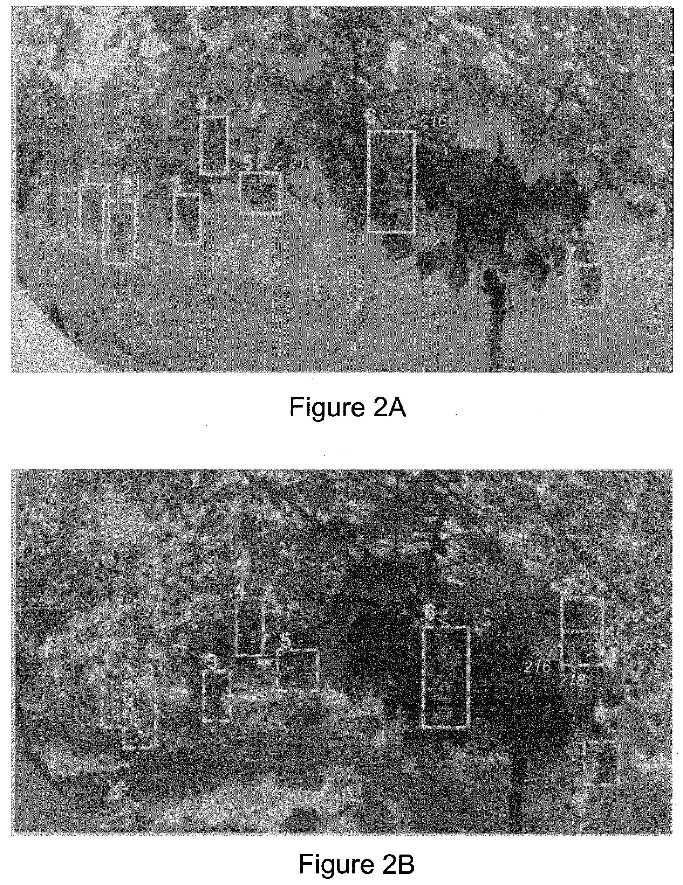

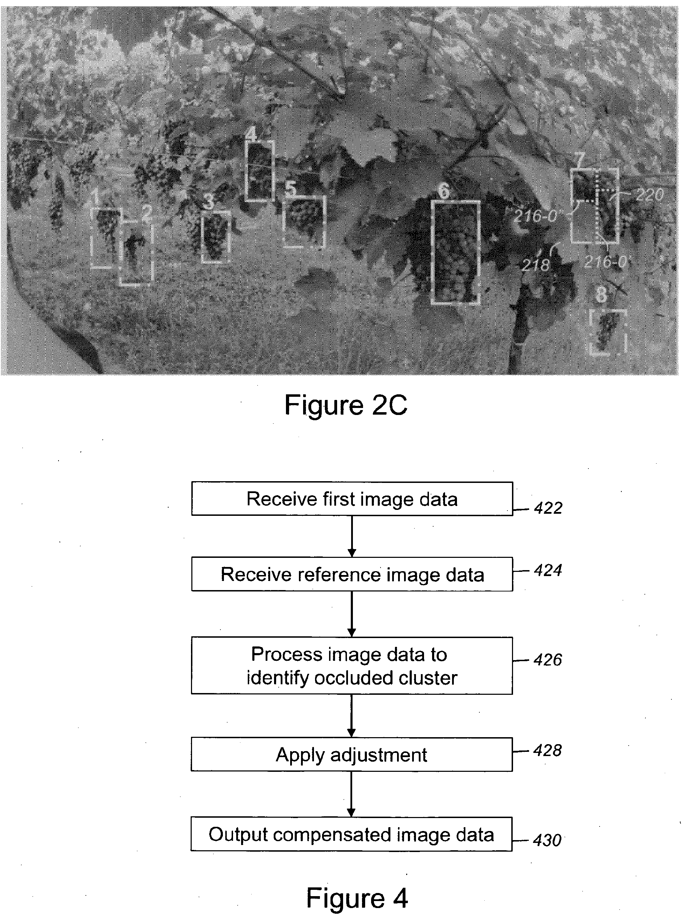

Figures 2A to 2C illustrate images captured in a setting similar to that of Figure 1. Each image was captured at the same location and at a different time. The images were captured days apart with the image of Figure 2A captured first, the image of Figure 2B captured second and the image of Figure 2C captured third. This can be seen in that the leaves hang lower in Figures 2B and 2C. The grapes have also reddened in Figure 2C although this is not identifiable in the grey-scale images.

Each image was captured when the position sensor 108 indicated that the vehicle 104 was in a particular position (same GPS latitude and longitude). The same vehicle 104 and a fixed camera mounting were used to capture each image so that the same viewing perspective was obtained for each image.

The illustrated images have been processed with a fruit cluster detection algorithm to identify one or more fruit clusters in each image. Fruit cluster detection algorithms are known and not described in detail here. Fruit cluster detection algorithms may comprise a machine learning model that has been trained with labelled images identifying fruit clusters. Fruit cluster detection algorithms may also use other known image processing techniques to detect the one or more fruit clusters.

Figure 3 illustrates an example process for identifying one or more fruit clusters in an image, such as the images of Figures 2A to 2C. The process may be carried out by a processor. The processor may be located on the vehicle 104 or may be located remotely, e.g. in the cloud.

At a first step 310, the processor receives an image of a fruit plant, such as one of the images of Figures 2A to 2C and/or an image captured by the camera 106 of Figure 1. The processor may also receive a location identifier associated with the image. The location identifier may be embedded in meta data of the image or associated with the image in another manner. The location identifier may comprise an absolute pose (position and orientation) of the camera 106 when the image was captured (or similarly an absolute pose of the vehicle 104 and a relative pose of the camera 106 with respect to the vehicle 104 when the image was captured).

At a second step 312, the processor performs a fruit cluster detection algorithm on the image to identify one or more fruit clusters in the image. Identified fruit clusters are shown in Figures 2A to 2C as white bounding boxes 216 labelled "1" to "8" (fruit cluster identifiers).

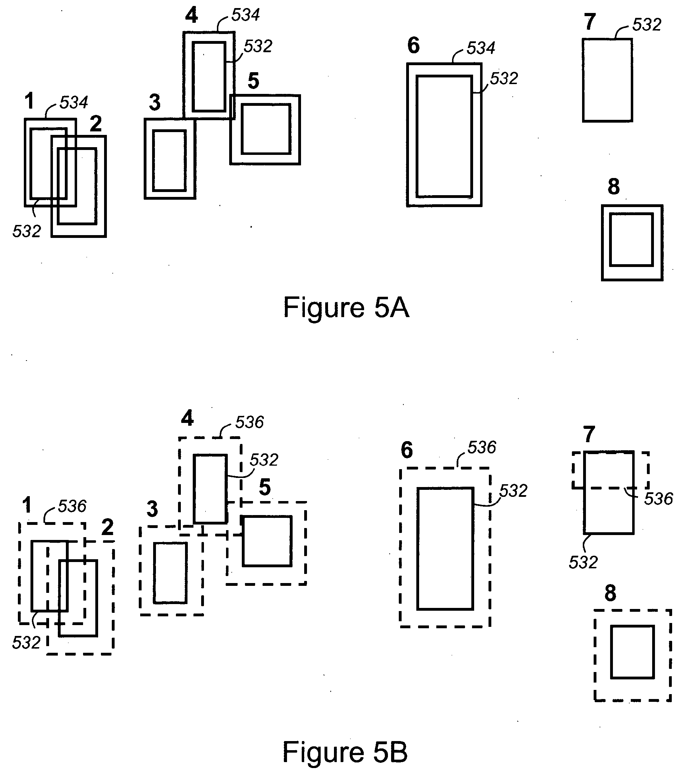

At a third step 314, the processor outputs image data. The image data may comprise one or more fruit cluster datasets corresponding to each of the one or more fruit clusters. As disclosed herein, a fruit cluster dataset may include information relating to the identified fruit clusters. For example, a fruit cluster dataset may comprise information to define a position of a bounding shape of the fruit cluster (such as the bounding boxes 216) in the image. For example, a fruit cluster dataset may comprise one or more of: an area of the bounding shape, a centroid of the bounding shape, the co-ordinates of one or more vertices of the bounding shape, one or more edge vectors of the bounding shape, an orientation of the bounding shape, a radius of the bounding shape, a series of values to define a perimeter of the bounding shape, or one or more other parameters to define the position and/or orientation of the bounding shape. In some examples, the fruit cluster dataset may comprise a fruit count corresponding to the number of pieces of fruit within the fruit cluster. The fruit cluster dataset may also include a fruit cluster identifier (also referred to herein as a label) to identify each individual fruit cluster within the image (see labels "1" to "8" in Figures 2A to 2C and 5A to 5D).

The image data may also comprise the location identifier associated with the image.

Outputting image data provides a convenient way to store and communicate the information on the identified clusters of each image. Images may be captured for each row of vines 102 or for each plant for each operation during the crop cycle resulting in a large number of images. Storing the image data rather than the individual images can enable reduced data storage requirements and faster subsequent processing for monitoring the crop growth and harvest estimation.

By capturing images of a plurality of fruit plants of the fruit crop at different stages of the crop cycle, and identifying fruit clusters therein, the growth of the fruit plant can be monitored and a harvest yield can be estimated prior to the harvesting process. This can help identify any issues with the fruit crop prior to harvesting which may be correctable.

Inspection of Figures 2A to 2C illustrates an issue that can arise when monitoring fruit crops in this way. Later in the cycle, closer to harvest, leaf coverage can be greater, and leaves may occlude or partially occlude a fruit cluster. This can lead to incorrect determination of fruit presence and estimated yield. This corresponds to the time when the yield estimate is more critical for determining a time to harvest and any issues with the fruit crop. The issue of leaf occlusion can be seen for the fruit cluster with the bounding boxes 214 labelled "7" in Figures 2B and 2C. In Figure 2B, a leaf 218 partially occludes the fruit cluster 220 identified by the bounding box 216. As a result, the process of Figure 2 results in an initial identification of a fruit cluster defined by the initial bounding box 216-0. In a similar manner, the occluding effect of the leaf 218 in Figure 2C results in an initial identification of two separate fruit clusters defined by the bounding boxes 216-0' and 216-0". In Figure 2A, the leaf 218 has fully occluded the same fruit cluster.

Systems and methods of the present disclosure provide a way to address leaf occlusion of fruit clusters when monitoring fruit crops using image data. Earlier images are used as reference images to identify and correct for any occluded fruit clusters.

Figure 4 illustrates a method of monitoring a fruit crop according to an embodiment of the present disclosure. The method may be performed by one or more processors (which may simply be referred to herein as "the processor") which may be located on the vehicle and/or remotely on a server or in the cloud. The processors may store and or retrieve image data from one or more data storage devices which may also be positioned on the vehicle and/or remotely. The one or more processors and one or more data storage devices may be communicatively coupled over a communications network.

A first step 422 comprises receiving first image data corresponding to a first image of a fruit plant. The first image data comprises one or more first fruit cluster datasets corresponding to one or more respective fruit clusters visible in the first image. Each first fruit cluster dataset may comprise one or more metrics for defining a dimension and/or position of the respective fruit cluster within the image. For example, each first fruit cluster dataset may comprise parameters to define a bounding shape of the respective fruit cluster in the image, as described above. The first fruit cluster dataset may comprise a fruit count of the respective cluster.

A second step 424 comprises receiving reference image data corresponding to one or more reference images of the [same] fruit plant captured at an earlier time than the first image. The reference image data comprises one or more reference fruit cluster datasets corresponding to one or more respective fruit clusters visible in the one or more reference images. In the same way as described for the first fruit cluster dataset, each reference fruit cluster dataset may comprise one or more metrics for defining a dimension and/or position of the respective fruit cluster. The one or more reference images may comprise any of: the most recent image, the most recent two images, an earliest image captured or all earlier images. Using reference image data for a reference image captured early in the crop cycle can minimise leaf occlusion in the reference image because the leaf coverage is minimal, yet the fruit clusters are identifiable as clusters of berries, buds or blooms.

When the reference image data corresponds to a plurality of reference images (at a respective plurality of different earlier times), each reference fruit cluster dataset may comprise a plurality of reference fruit cluster subsets corresponding to the respective plurality of reference images. Each reference fruit cluster subset may comprise one or more metrics for defining the dimension and/or position of the respective fruit cluster in the respective reference image.

A third step 426 comprises processing the first image data to the reference image data to identify one or more occluded fruit clusters in the first image data. For example, processing the first image data and the reference image data may comprise comparing/correlating/matching each first fruit cluster dataset to a respective reference fruit cluster dataset and identifying an occluded fruit cluster based on any anomalies in the comparison/correlation/matching. Detailed examples of the third step 426 are described below.

A fourth step 428 comprises applying an occluded fruit cluster adjustment to the one or more occluded fruit clusters to obtain compensated first image data. For example, if a first fruit cluster dataset relates to an anomalously small bounding shape due to leaf occlusion, the fourth step may comprise scaling the first fruit cluster dataset based on the comparison of non-occluded first fruit cluster datasets to the corresponding reference fruit cluster datasets.

A fifth step 430 comprises outputting the compensated first image data. The compensated first image data may be output to a subsequent process (such as a harvest yield calculation process) or to a data storage device.

### Matching the First Image Data to the Reference Image Data based on Location Identifier

In some examples, the first image data may comprise a first location identifier and the reference image data may comprise a reference location identifier. As described above, the location identifiers may correspond to the absolute pose of the camera when the image was captured. For example, the reference location identifier may comprise a position identifier derived from the position sensor, e.g. GPS latitude and GPS longitude and a camera orientation identifier (pitch, roll, yaw) derived from an orientation sensor of the camera or mount.

The second step 424 may comprise retrieving the reference image data from a data storage device based on the first location identifier. For example, the one or more processors may select reference image data (from a plurality of stored reference image data) having a reference location identifier that matches the first location identifier. Here, matching may correspond to matching within a threshold range of the first location identifier. For example, matching may correspond to the position identifier (e.g. GPS coordinates) matching within a threshold distance, such as 50 cm, 10 cm, or 5 cm. Additionally, or alternatively, matching may correspond to the camera orientation identifier matching within a threshold conical range such as within 10 degrees, 5 degrees or 1 degree. In some examples, the one or more processors may select the reference image data with a reference location identifier that is the closest match to the first location identifier. The closest match may correspond to the closest match between position identifiers (e.g. closest GPS coordinate match).

### Processing the First Image Data and the Reference Image Data

### Scaling

The above-described matching of first and reference location identifiers may be limited by the accuracy of the position sensor. Therefore, the distance of the camera from the fruit plant may differ, within an error range, between the reference image and the first image. The dimension of the fruit clusters in the first image and the reference image will change based on the distance of the camera from the fruit plant. For example, if the camera is further away from the fruit clusters in the first image than in the reference image, the fruit clusters may appear smaller even though they were captured at a later date.

To overcome the dimension error, the first image data and the reference image data may also include reference object data. Reference object data may correspond to the dimensions of a reference object in the image. The reference object may comprise an object that will not substantially change in size between the images. In some examples, the reference object may comprise a trunk of the fruit plant, a tree support stake and/or a fence member (post, beam, wire etc). In examples with reference object data, the method may comprise scaling the first image data based on a ratio of a dimension of the reference object in the first image data to the dimension of the reference object in the reference image data. Scaling the first image data may comprise scaling each of the first fruit cluster datasets according to the ratio.

In some examples, scaling of the first image data is not necessary. For example, if the images comprise stereo camera images or lidar images, they may be correctly dimensioned. In some examples, discussed below, an average dimension ratio is determined between the first fruit cluster datasets and the reference fruit cluster datasets. This average dimension ratio can be negative and this does not affect the identification or correction of occluded fruit clusters. Furthermore, the yield estimation process may not require a calibrated dimension. Some yield estimations may require calibration against actual harvested material following harvest of an initial portion of the fruit crop.

### Associating Fruit Cluster Datasets

Processing the first image data and the reference image data may comprise associating each first fruit cluster dataset with a respective reference fruit cluster dataset. For example, each fruit cluster dataset may include a bounding shape position within the image that defines the position of the bounding shape of the respective fruit cluster, for example a centroid, origin etc. The processor may associate each first fruit cluster dataset with the respective reference fruit cluster dataset by matching the corresponding bounding shape positions. In some examples, the processor may match the absolute positions of the bounding shapes within the respective images. In some examples, the processor may associate each first fruit cluster dataset with the respective reference fruit cluster dataset by matching the relative positions of the bounding shapes to each other within the first and reference fruit cluster datasets.

The absolute or relative matching of bounding shape positions may be within a matching threshold because the relative position of the same fruit cluster within an image and relative to other fruit clusters will change as branches grow and/or drop as they get heavier etc.

Figures 5A to 5C illustrate example associations of first fruit cluster datasets with reference fruit cluster datasets.

Reference image data comprising eight reference fruit cluster datasets 532 labelled "1" to "8" are illustrated by solid bounding boxes.

In Figure 5A, first image data 534 is also illustrated as solid bounding boxes that are larger than the bounding boxes of the reference image data 532. The first image data 534 corresponds to the first fruit cluster datasets identified in Figure 2A. In Figure 2A, the fruit cluster corresponding to the reference fruit cluster dataset labelled "7" in Figure 5A is occluded by a leaf 218. As a result, there is no first fruit cluster dataset 534 labelled "7" in Figure 5A.

In Figure 5B, first image data 536 is illustrated as dashed bounding boxes. The first image data 536 corresponds to the first fruit cluster datasets identified in Figure 2B. In Figure 2B, the fruit cluster corresponding to the fruit cluster dataset labelled "7" is partially occluded by the leaf 218. As a result, the first fruit cluster dataset 536 labelled "7" in Figure 5B is anomalously small.

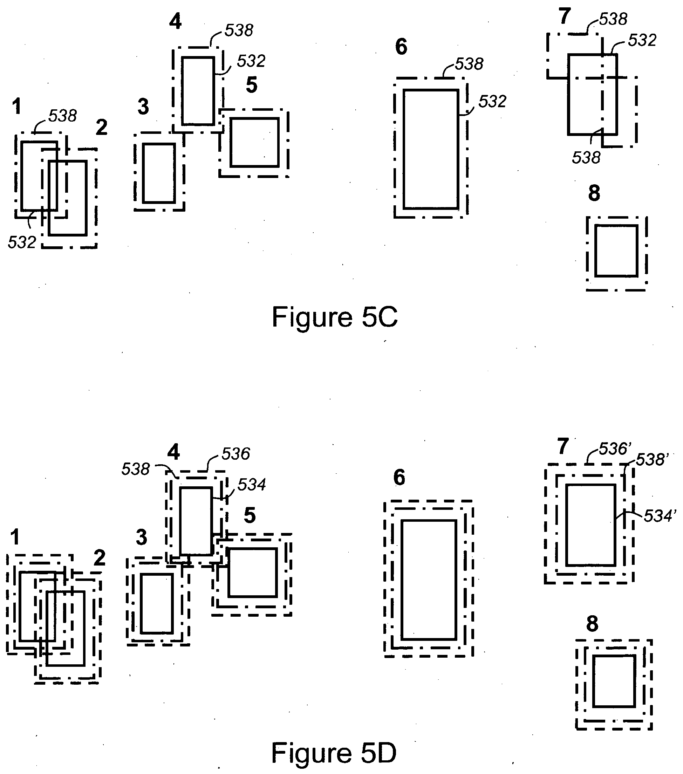

In Figure 5C, first image data 538 is illustrated as dash-dot bounding boxes. The first image data 538 corresponds to the first fruit cluster datasets identified in Figure 2C. In Figure 2C, the fruit cluster corresponding to the fruit cluster dataset labelled "7" is partially occluded by the leaf 218. As a result, two first fruit cluster datasets 538 have been associated with the reference fruit cluster dataset labelled "7" in Figure 5C.

Identification of these example occlusions and the corresponding compensation of the first image data is discussed below with continuing reference to Figures 2A-2C and 5A-5C.

### Identifying Occluded Fruit Clusters

Following association of each first fruit cluster dataset with a respective reference fruit cluster dataset, the processor may identify one or more occluded fruit clusters based on the association.

In some examples, a fruit cluster that is visible in the one or more reference images may be completely occluded in the first image. As a result, a reference fruit cluster dataset will not have an associated first fruit cluster dataset. The processor may identify any reference fruit cluster datasets that are not associated with a first fruit cluster dataset as an occluded fruit cluster of the first image data. An example of a complete occlusion is illustrated in Figures 2A and 5A in which the leaf 218 completely occludes the fruit cluster that is visible and labelled as "7" in Figures 2B and 2C. As a result, the reference fruit cluster dataset 532 labelled "7" in Figure 5A is not associated with a first fruit cluster dataset 534. The processor can identify this reference fruit cluster dataset as an occluded fruit cluster dataset of the first image data.

In some examples, a fruit cluster that is visible in the one or more reference images may be partially occluded in the first image. As a result, the bounding box or fruit count of the respective first fruit cluster dataset will be anomalously small. The processor may identify such anomalies as occluded fruit clusters. In particular, the processor may: (i) for each first fruit cluster dataset, determine a dimension ratio between the dimension of the first fruit cluster dataset and a corresponding reference dimension of the respective reference fruit cluster dataset; and (ii) identify an occluded fruit cluster if the respective dimension ratio is an outlier relative to a distribution of all the dimension ratios. The processor may identify a dimension ratio as an outlier using any known statistical technique for identifying outliers in a distribution, e.g a z-score, a threshold number of standard deviations etc.

In Figures 5B and 5C the area ratio for the fruit cluster datasets labelled 1-6 and 8 is ~1.1. In contrast, the area ratios for the fruit cluster datasets labelled 7 are much less than 1. The processor can identify these anomalously low area ratios as corresponding to occluded fruit clusters.

In some examples, the processor may determine an expected dimension threshold for a dimension of each first fruit cluster dataset based on the respective reference fruit cluster dataset. The processor may then identify a first fruit cluster as an occluded fruit cluster if a dimension of the first fruit cluster dataset does not satisfy the expected dimension threshold. The dimension may comprise one or more lengths of the bounding shape of the fruit cluster, including an edge length, a diameter etc. The dimension may comprise an area of the bounding shape. In examples in which the fruit cluster datasets include fruit count, the dimension may comprise the fruit count.

The expected dimension threshold may be defined in a number of ways.

If the dimension is a fruit count, the expected fruit count threshold of the first fruit cluster dataset may be equal to the fruit count of the respective reference fruit cluster dataset.

If the dimension is one or more lengths or an area, the processor may determine the expected dimension threshold of each first fruit cluster dataset by: (i) determining the dimension ratio between the dimension of the first fruit cluster dataset and the corresponding reference dimension of the respective reference fruit cluster dataset; (ii) determining an average dimension ratio by averaging the dimension ratios; and (iii) determining the expected dimension threshold for each first fruit cluster dataset based on the corresponding reference dimension of the respective reference fruit cluster dataset and the average dimension ratio. The expected dimension threshold may be equal to the sum of the corresponding reference dimension and the average dimension ratio optionally minus an error offset. The error offset may correspond to a percentage of the average dimension ratio (e.g. 10%) or to a number of standard deviations (e.g. 1 or 2 standard deviations) of the distribution of dimension ratios. The error offset allows for non-occluded fruit clusters at the lower end of the dimension ratio distribution. Using the average dimension ratio and the error allowance is one example method of identifying outliers in the distribution of dimension ratios.

The above identification examples using dimension ratios are particularly advantageous for examples that don't employ scaling because they can allow for first fruit cluster datasets having smaller bounding boxes than the reference fruit cluster datasets (due to the camera being further away).

In examples that apply scaling, either automatically through use of a stereo camera or Lidar or by using reference object data, the expected dimension threshold may be set as greater than or equal to the corresponding reference dimension in the respective reference fruit cluster dataset. In some examples, the processor may determine the expected dimension threshold by multiplying the corresponding reference dimension of the respective reference fruit cluster dataset by: (i) a time difference between the capture of the reference image and the capture of the first image; and (ii) an expected growth rate. In some examples, the expected growth rate may be a predetermined rate based on the stage of the fruit crop cycle derived from historic data. In some examples where the reference image data corresponds to a plurality of reference images taken at a plurality of earlier times and the reference fruit cluster dataset comprises a respective plurality of reference fruit cluster subsets, the processor may determine the expected growth rate based on the rate of increase of the corresponding reference dimension over the plurality of reference fruit cluster subsets.

### Verifying Occluded Fruit Clusters

In some examples, a fruit cluster may fall from the fruit plant or individual fruit pieces may fall from the fruit cluster between the capturing of the last reference image and the first image. These missing or depleted fruit clusters may be falsely identified as occluded fruit clusters in the first image. To avoid this misidentification, the processor may verify each identified occluded fruit cluster by performing a leaf detection process.

The processor may receive the first image and perform a leaf detection process on an occluded area of the image corresponding to the occluded fruit cluster. In the example of Figures 2A and 5A, the processor may perform the leaf detection process on an occluded area of the image corresponding to the reference fruit cluster dataset labelled "7." In the example of Figures 2B, 2C and 5B and 5C, the processor may perform the leaf detection process on an occluded area of the image corresponding to the portion of the reference fruit cluster dataset 532 labelled "7" that does not overlap with the respective first fruit cluster datasets 536, 538 labelled "7."

If a leaf is detected, the processor may verify or confirm that the identified occluded fruit cluster is occluded by a leaf. If no leaf is detected, the processor may reclassify the occluded fruit cluster as a depleted fruit cluster. In other words, the apparent occluded fruit cluster in the first image is either missing or has reduced in size relative to the reference image and the reduced or missing fruit cluster is an accurate measurement.

### Applying Occluded Fruit Cluster Adjustment

Following identification, and optionally verification, of an occluded fruit cluster, the processor applies an occluded fruit cluster adjustment to the one or more occluded fruit clusters to obtain compensated first image data.

The processor may apply the occluded fruit cluster adjustment by determining an average dimension ratio between the first fruit cluster datasets and the respective reference fruit cluster datasets. The average dimension ratio may be calculated over the non-occluded fruit clusters. In other words, outlier dimension ratios corresponding to occluded fruit clusters may be excluded from the calculation of the average dimension ratio.

For each of the one or more occluded fruit clusters, the processor may scale the respective reference fruit cluster dataset by the average dimension ratio. For example, referring to Figure 5B, the processor may determine the area ratio of each of fruit datasets 1 to 6 and 8 to be in the region of 1.1 and the area ratio of fruit dataset 7 to be 0.5. The processor may identify the value of 0.5 as an outlier and determine the average area ratio as 1.1. The processor may then scale the area of the reference fruit cluster dataset labelled 7 by the average area ratio of 1.1 to obtain a compensated first fruit cluster dataset 536'. Figure 5D illustrates compensated first image data comprising the compensated first fruit cluster dataset 534', 536', 538' labelled "7" corresponding to each of the occluded fruit clusters in Figures 5A to 5C. The first fruit cluster datasets 534, 536, 538 of Figures 5A to 5D have not been scaled. This can be seen in Figured 5D because the first fruit cluster dataset 536 corresponding to the image of Figure 2B is larger than the first fruit cluster dataset 538 corresponding to the image of Figure 2C which was captured after the image of Figure 2B.

In some examples, the processor may apply the occluded fruit cluster adjustment in a different way. For example, the processor may, for each of the one or more occluded fruit clusters: (i) match one or more dimensions of the first fruit cluster dataset of the occluded fruit cluster to one or more corresponding reference dimensions of the respective reference fruit cluster dataset to identify one or more non-occluded dimensions; (ii) determine a non-occluded dimension ratio based on the difference between the one or more non-occluded dimensions in the first fruit cluster dataset and the corresponding one or more non-occluded dimensions in the respective reference fruit cluster dataset; and (iii) scale the respective reference fruit cluster dataset according to the non-occluded dimension ratio to provide a compensated first fruit cluster dataset.

Referring to the example of Figure 5B, the processor may determine a horizontal length of the first fruit cluster dataset labelled "7" to match the horizontal length of the respective reference fruit cluster dataset labelled "7" within a matching threshold. The processor may then determine the non-occluded dimension ratio between the two horizontal lengths as 1.15. The processor may then scale the reference fruit cluster dataset labelled "7" by this non-occluded dimension ratio to obtain the compensated first fruit cluster dataset 536' (Figure 5A).

### Yield Estimation

The processor may store the compensated first image data may as reference image data for use with future first images captured on subsequent operations. For example, the compensated image data may be stored as reference fruit cluster subsets within the reference image data. In this way, the processor may update the reference image data with the compensated first image data.

The compensated first image data accurately reflects the fruit quantity on the fruit plant by compensating for occlusion. As a result, the processor may determine a crop yield estimate using the compensated first image data.

It will be appreciated that the process described for the first image data may be repeated for multiple further image data (second image data of a second plant and corresponding second reference image data, third image data of a third plant and corresponding third reference data, and so on). In this way, compensated image data can be generated for an entire vine or vineyard. For example, the processor may: receive second image data corresponding to a second image of a second fruit plant, wherein the second image data comprises one or more second fruit cluster datasets representing one or more respective fruit clusters visible in the second image; receive second reference image data corresponding to one or more second reference images of the second fruit plant captured at an earlier time than the second image, wherein the second reference image data comprises one or more second reference fruit cluster datasets representing one or more respective fruit clusters visible in the one or more second reference images; process the second image data and the second reference image data to identify one or more second occluded fruit clusters in the second image data; apply the occluded fruit cluster adjustment to the one or more second occluded fruit clusters to obtain compensated second image data; and output the compensated second image data.

The processor may determine a fruit crop yield estimate based on the compensated first image data and the compensated second image data. More generally, the processor may determine a fruit crop yield estimate based on the compensated first image data and compensated further image data determined for further fruit plants. The yield estimate may also be based on the respective reference image data. The processor may perform the fruit crop yield estimate from the compensated image data using a known yield estimate process.

Images may only be required for a sample area of a fruit crop to determine a yield for the whole fruit crop. Furthermore, the yield estimate may be calibrated using a first sample of the harvested crop. The vehicle, such as a grape harvester, may include a dynamic weighing system, that can weight the first sample. Alternatively, the first sample may be weighed externally to the vehicle after a first sample harvest. he yield estimate may be determined by calibrating the compensated image data corresponding to the first sample using the measured weight.

Returning to Figure 1, the disclosed methods may be performed by one or more processors located on the vehicle 104. Operation of the vehicle 104 to perform such a method may be as follows.

During a first agricultural operation on the fruit crop (e.g. spraying), the vehicle 104 may traverse along the rows of vines and the camera 106 may capture images at a series of discrete positions, or continuously. The processor may store these images as first to nth reference images including a first reference image of a first fruit plant, a second reference image of a second fruit plant, and so on.

The processor may receive the references images and perform a fruit cluster detection algorithm on each reference image to determine reference image data including one or more reference fruit cluster datasets for each reference image. The processor may store the reference image data in a memory of the vehicle 104. The processor may receive a position value from the position sensor 108 for each reference image and stores this as location data as part of the reference image data.

During a second agricultural operation on the fruit crop (e.g. subsequent spraying or a pre-harvesting survey) which may be days, weeks or months later, the vehicle 104 (or a second vehicle) may traverse along the rows of vines and the camera 106 may capture images a second time. The vehicle 104 may drive to a location corresponding to the location data of the first reference image data. The camera 106 may capture a first image of the first fruit plant. The processor may perform a fruit cluster detection algorithm on the first image to determine first image data including one or more first fruit cluster datasets. In one of the ways described above, the processor may process the first image data and the first reference image data to identify one or more occluded fruit clusters in the first image data and apply an occluded fruit cluster adjustment to the one or more occluded fruit clusters to obtain compensated first image data.

The vehicle 104 may continue to a second location corresponding to the location data of the second reference image data and the camera 106 may capture a second image. The processor may perform a fruit cluster detection algorithm on the second image to determine second image data including one or more second fruit cluster datasets. In one of the ways described above, the processor may process the second image data and the second reference image data to identify one or more second occluded fruit clusters in the second image data and apply an occluded fruit cluster adjustment to the one or more second occluded fruit clusters to obtain compensated second image data.

The process may continue to repeat for further capturing and processing of images at further locations corresponding to the further reference images. The processor may determine a yield estimate for the fruit crop based on the compensated image data.

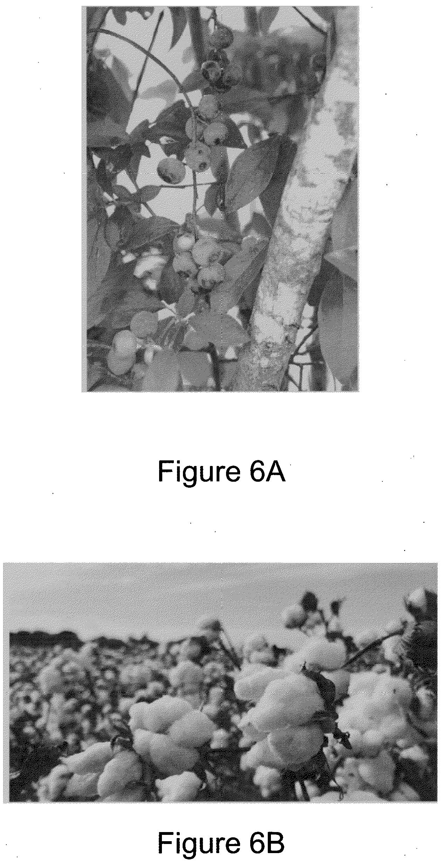

Although the present disclosure has been primarily directed to grape plants and grape clusters, it will be appreciated that the terms fruit plant and fruit cluster may relate to any fruit plant that comprises fruit clusters including berry plants. For example, Figure 6A illustrates a blueberry plant with blueberry clusters. The terms fruit plant and fruit cluster may further extend to any harvestable crop that grows in clusters and may not necessarily be conventionally described as a fruit. For example, the terms fruit plant and fruit cluster as disclosed herein can include a cotton plant and cotton clusters as illustrated in Figure 6B.

Throughout the present specification, the descriptors relating to relative orientation and position, such as "horizontal", "vertical", "top", "bottom" and "side", are used in the sense of the orientation of the apparatus and shapes as presented in the drawings. However, such descriptors are not intended to be in any way limiting to an intended use of the described or claimed invention.

It will be appreciated that any reference to "close to", "before", "shortly before", "after" "shortly after", "higher than", or "lower than", etc, can refer to the parameter in question being less than or greater than a threshold value, or between two threshold values, depending upon the context.

## Claims

1. A computer-implemented-method of monitoring a fruit crop, the method comprising:
receiving first image data corresponding to a first image of a fruit plant, wherein the first image data comprises:
one or more first fruit cluster datasets representing one or more respective fruit clusters visible in the first image; and
a first location identifier associated with the first image;
receiving reference image data corresponding to one or more reference images of the fruit plant captured at an earlier time than the first image, wherein the reference image data comprises:
one or more reference fruit cluster datasets representing one or more respective fruit clusters visible in the one or more reference images; and
a reference location identifier associated with the reference image, wherein the reference location identifier matches the first location identifier;
processing the first image data and the reference image data to identify one or more occluded fruit clusters in the first image data;
applying an occluded fruit cluster adjustment to the one or more occluded fruit clusters to obtain compensated first image data; and
outputting the compensated first image data.

2. The method of claim 1, wherein processing the first image data and the reference image data comprises:
associating each first fruit cluster dataset with a respective reference fruit cluster dataset; and
identifying the one or more occluded fruit clusters based on the association.

3. The method of claim 2, wherein the method comprises identifying any reference fruit cluster datasets that are not associated with a first fruit cluster datasets as an occluded fruit cluster of the first image data.

4. The method of claim 2 or claim 3, wherein identifying the one or more occluded fruit clusters comprises:
for each first fruit cluster dataset, determining a dimension ratio between the dimension of the first fruit cluster dataset and a corresponding reference dimension of the respective reference fruit cluster dataset; and
identifying an occluded fruit cluster if the respective dimension ratio is an outlier relative to the other dimension ratios.

5. The method of any of claims 2 to 4, wherein identifying the one or more occluded fruit clusters comprises:
determining an expected dimension threshold for a dimension of each first fruit cluster dataset based on the respective reference fruit cluster dataset; and
identifying an occluded first fruit cluster if the dimension of the respective first fruit cluster dataset does not satisfy the respective expected dimension threshold.

6. The method of claim 5, wherein determining the expected dimension threshold for a dimension of each first fruit cluster dataset comprises:
determining a dimension ratio between the dimension of the first fruit cluster dataset and a corresponding reference dimension of the respective reference fruit cluster dataset;
determining an average dimension ratio by averaging the dimension ratios; and
determining the expected dimension threshold for each first fruit cluster dataset based on the corresponding reference dimension of the respective reference fruit cluster dataset and the average dimension ratio.

7. The method of claim 5, wherein determining the expected dimension threshold for a dimension of each first fruit cluster dataset comprises one or more of:
determining the expected dimension threshold as equal to a corresponding reference dimension of the respective reference fruit cluster dataset; or
determining the expected dimension threshold based on:
a corresponding reference dimension of the respective reference fruit cluster dataset;
a time between a capture of the reference image and a capture of the first image; and
an expected growth rate.

8. The method of claim 7, wherein the reference image dataset corresponds to a plurality of reference images of the fruit plant and the reference fruit cluster dataset comprises a plurality of reference fruit cluster subsets corresponding to the plurality of reference images, wherein the method comprises:
determining the expected growth rate based on a rate of increase of the corresponding reference dimension between the plurality of reference fruit cluster subsets.

9. The method of any preceding claim, wherein the first image data and the reference image data comprise reference object data representing a substantially fixed dimension reference object, wherein the method comprises:
determining a scaling factor based on a change in dimension between the reference object data in the reference image data and the first image data; and
applying the scaling factor to the first image data.

10. The method of any preceding claim comprising, for each of the one or more identified occluded fruit clusters:
performing a leaf detection process on each occluded fruit cluster;
verifying the occluded fruit cluster if a leaf is detected; and
determining the occluded fruit cluster as a depleted fruit cluster if no leaf is detected.

11. The method of any preceding claim, wherein applying the occluded fruit cluster adjustment comprises:
for each first fruit cluster dataset, determining a dimension ratio between the dimension of the first fruit cluster dataset and a corresponding reference dimension of the respective reference fruit cluster dataset;
determining an average dimension ratio by averaging the dimension ratios; and
for each of the one or more occluded fruit clusters:
scaling the respective reference fruit cluster dataset according to the average dimension ratio.

12. The method of any of claims 1 to 10, wherein applying the occluded fruit cluster adjustment comprises:
for each of the one or more occluded fruit clusters:
matching one or more dimensions of the first fruit cluster dataset of the occluded fruit cluster to one or more corresponding dimensions of the respective reference fruit cluster dataset to identify one or more non-occluded dimensions;
determining a cluster growth rate based on the difference between the one or more non-occluded dimensions in the first fruit cluster dataset and the corresponding one or more non-occluded dimensions in the respective reference fruit cluster dataset; and
applying the cluster growth rate to the respective reference fruit cluster dataset to provide a compensated first fruit cluster dataset.

13. The method of any preceding claim comprising determining a fruit harvest yield estimate based on the compensated first image data and optionally the reference image data.

14. The method of any preceding claim wherein the fruit plant comprises a grape plant.

15. The method of any of claims 1 to 13, wherein the fruit plant comprises a cotton plant.

16. The method of any preceding claim, wherein the first image comprises one or more of: a camera image, a stereo camera image, a lidar image, a time-of-flight camera image, or a radar scan.

17. An agricultural vehicle comprising:
a radiation sensor; and
one or more processors configured to:
receive the reference image from the radiation sensor and process the reference image with a fruit cluster detection algorithm to provide the reference image data;
receive the first image from the camera and process the first image with the fruit cluster detection algorithm to provide the first image data; and
carry out the method of any of claims 1 to 15.
